# EUROPEAN PATENT APPLICATION

(11) **EP 4 708 608 A1**
(43) Date of publication of application: **11.03.2026**
(21) Application number: 24883604.1
(22) Date of filing: 27.11.2024
(51) Int. Cl.: H02J 3/32, H02J 3/38

(54) **CHARGING CONTROL METHOD AND APPARATUS, STORAGE AND CHARGING INTEGRATED SYSTEM, MEDIUM, AND PROGRAM PRODUCT**

(30) Priority: 10.07.2024 CN 202410918852
(71) Applicant: Contemporary Amperex Technology Co., Limited, Fujian 352100 (CN); Contemporary Amperex Future Energy Technology (Shenzhen) Limited, Shenzhen, Guangdong 518100 (CN)
(72) Inventor: WU, Kai, Fujian 352100 (CN); CHEN, Zhuo, Fujian 352100 (CN); CHENG, Yong, Fujian 352100 (CN); WANG, Pengmin, Fujian 352100 (CN); ZHENG, Zhimin, Fujian 352100 (CN); HUANG, Wenlong, Fujian 352100 (CN); SUN, Yonghuan, Fujian 352100 (CN); ZHANG, Zhen, Fujian 352100 (CN); LI, Miao, Fujian 352100 (CN)
(74) Representative: Ziebig Hengelhaupt Intellectual Property Attorneys Patentanwaltskanzlei PartGmbB
(86) International application number: PCT/CN2024/135019
(87) International publication number: WO 2026/011659

(57) **Abstract**

Embodiments of the present disclosure disclose a charge control method, a charge control apparatus, an integrated storage and charging system, a medium, and a program product. The charge control method includes: determining a load rate of a point of connection where the integrated storage and charging system is connected to a grid; where the integrated storage and charging system includes a charging apparatus and an energy storage apparatus; determining a working mode of the integrated storage and charging system and a power consumption object corresponding to the working mode based on the load rate of the point of connection; where the working mode includes a power supply mode and a charging mode; the power supply mode includes transmitting electric energy in an electrical device to the energy storage apparatus and/or the grid, and transmitting the electric energy of the energy storage apparatus to the grid and/or the electrical device for power supply, and the charging mode includes transmitting the electric energy of the grid to the energy storage apparatus and/or the electrical device for charging; determining working parameters corresponding to the working mode of the integrated storage and charging system based on the power consumption object, the power consumption object including at least one of the energy storage apparatus, the grid and the electrical device; and controlling the integrated storage and charging system to work according to the working parameters.

## Description

### CROSS-REFERENCE TO RELATED APPLICATIONS

The present disclosure is proposed based on the China patent application No. 202410918852.2 filed on July 10, 2024 and entitled "CHARGE CONTROL METHOD, CHARGE CONTROL APPARATUS, INTEGRATED STORAGE AND CHARGING SYSTEM, MEDIUM, AND PROGRAM PRODUCT", and claims priority of the Chinese Patent Application, the entire content of which is incorporated herein by reference.

### TECHNICAL FIELD

The present application relates to, but is not limited to, the technical field of charging and discharging, and in particular to a charge control method, a charge control apparatus, an integrated storage and charging system, a medium, and a program product.

### BACKGROUND

At present, with the rapid increase of electrical devices, charging piles have a great impact on a grid when working at a full load, and there are problems such as insufficient capacity of the grid and poor electric power quality during power consumption peak, thereby leading to slow charging of the electrical device and poor user experience.

### SUMMARY OF THE INVENTION

In view of this, embodiments of the present disclosure provide a charge control method, a charge control apparatus, an integrated storage and charging system, a medium and a program product.

The technical solution of the present disclosure is implemented as follows.

In a first aspect, an embodiment of the present disclosure provides a charge control method, which is applied to an integrated storage and charging system, the integrated storage and charging system including an energy storage apparatus and a charging apparatus; where one end of the energy storage apparatus is connected to a grid via a DC bus; the other end of the energy storage apparatus is connected to the charging apparatus; the energy storage apparatus is configured to charge a battery of an electrical device via the charging apparatus, or to output electric energy in the energy storage apparatus to the DC bus; one end of the charging apparatus is connected to a charging gun, and the other end of the charging apparatus is connected to the DC bus; the charging apparatus is configured to transmit the electric energy in the electrical device to the energy storage apparatus and/or the grid, or to transmit the electric energy of the grid and/or the electric energy of the energy storage apparatus to the electrical device; the charge control method includes: determining a load rate of a point of connection where the integrated storage and charging system is connected to the grid; determining a working mode of the integrated storage and charging system and a power consumption object corresponding to the working mode based on the load rate of the point of connection; where the working mode includes a power supply mode and a charging mode; the power supply mode includes transmitting the electric energy in the electrical device to the energy storage apparatus and/or the grid, and transmitting the electric energy of the energy storage apparatus to the grid and/or the electrical device, and the charging mode includes transmitting the electric energy of the grid to the energy storage apparatus and/or the electrical device; determining working parameters corresponding to the working mode of the integrated storage and charging system based on the power consumption object; where the power consumption object includes at least one of the energy storage apparatus, the grid and the electrical device; and controlling the integrated storage and charging system to work according to the working parameters.

In an embodiment of the present disclosure, in one aspect, the integrated storage and charging system can flexibly adjust its working mode according to the load rate of the point of connection where the integrated storage and charging system is connected to the grid, so that the integrated storage and charging system can optimize its operation according to the real-time energy demand and supply situation, thereby improving the electric energy utilization efficiency. In another aspect, the integrated storage and charging system can achieve energy self-sufficiency to a certain extent by integrating energy storage apparatuses.

In some embodiments, the determining a working mode of the integrated storage and charging system and an power consumption object corresponding to the working mode based on the load rate of the point of connection includes: determining an estimated charging period of the electrical device in response to a charging event of the electrical device; determining the load rate of the point of connection in the estimated charging period based on the estimated charging period; determining the working mode of the integrated storage and charging system and the power consumption object corresponding to the working mode based on the load rate of the point of connection in the estimated charging period.

In an embodiment of the present disclosure, in one aspect, by predicting the load rate of the point of connection in the estimated charging period according to the estimated charging period of the electrical device, the accuracy of the load rate can be improved; and in another aspect, by determining the working mode of the integrated storage and charging system according to the load rate of the point of connection in the estimated charging period, the integrated storage and charging system can quickly respond to various changes in power demand and flexibly adjust the working mode, which helps the integrated storage and charging system to better adapt to different power consumption scenarios and demands and improve the adaptability and reliability of the integrated storage and charging system.

In some embodiments, the determining the load rate of the point of connection in the estimated charging period based on the estimated charging period includes: determining the load rate of the point of connection in a first period of power supply by the grid as a first load rate in a case where the estimated charging period falls within the first period; determining the load rate of the point of connection in a second period of power supply by the grid as a second load rate in a case where the estimated charging period falls within the second period; where the first period and the second period are different.

In an embodiment of the present disclosure, by matching the estimated charging period with different periods of power supply by the grid, the load rate of the point of connection in different periods can be predicted more accurately, which helps the integrated storage and charging system to utilize energy more efficiently and reduce energy waste.

In some embodiments, the determining the working mode of the integrated storage and charging system and the power consumption object corresponding to the working mode based on the load rate of the point of connection in the estimated charging period includes: determining whether the load rate of the point of connection in the estimated charging period is greater than or equal to a first preset value; determining the working mode of the integrated storage and charging system as the power supply mode and determining the power consumption object corresponding to the power supply mode in a case where the load rate is greater than or equal to the first preset value; where the power supply mode includes supplying power to the electrical device via the energy storage apparatus, and the power consumption object is the electrical device; and determining the working mode of the integrated storage and charging system as the charging mode and the power consumption object corresponding to the charging mode in a case where the load rate is less than the first preset value; where the charging mode includes charging the electrical device via the grid, and the power consumption object is the electrical device.

In an embodiment of the present disclosure, by setting the first preset value, the integrated storage and charging system can flexibly adjust its working mode according to the load rate of the point of connection in the estimated charging period. When the load rate is high, the integrated storage and charging system can quickly switch to the power supply mode and supply power to the electrical device via the energy storage apparatus; while when the load rate is low, the integrated storage and charging system can choose the charging mode and charge the electrical device via the grid. This flexibility enables the integrated storage and charging system to better adapt to changes in the grid and the power demand of electrical device.

In some embodiments, the determining the working mode of the integrated storage and charging system as the power supply mode and the power consumption object corresponding to the power supply mode in a case where the load rate is greater than or equal to the first preset value includes: acquiring a current state of charge value and/or a remaining state of energy value of the energy storage apparatus in a case where the load rate is greater than or equal to the first preset value; determining whether the energy storage apparatus is capable of supplying power to the grid based on the state of charge value and/or the remaining state of energy value; determining the power supply mode as supplying power to the grid via the energy storage apparatus, and determining the power consumption object as the grid in a case where it is determined that the energy storage apparatus is capable of supplying power to the grid.

In an embodiment of the present disclosure, in one aspect, the integrated storage and charging system can accurately judge the power supply capacity of the energy storage apparatus based on the state of charge value and/or the remaining state of energy value of the energy storage apparatus, thereby avoiding attempting to supply power when the energy storage apparatus is out of power, causing energy waste; and in another aspect, when the load rate is high, if the energy storage apparatus has enough power, the energy storage apparatus can supply power to the grid, which helps to reduce the power supply burden on the grid, thereby enhancing the stability of the grid.

In some embodiments, the charge control method further includes: determining the power supply mode as supplying power to the electrical device via the energy storage apparatus, and determining the power consumption object as the electrical device in a case where it is determined that the energy storage apparatus is incapable of supplying power to the grid.

In an embodiment of the present disclosure, if the power of the energy storage apparatus is not enough to supply power to the grid, but is enough to supply power to the electrical device, power can be supplied to the electrical device to ensure the normal operation of the electrical device.

In some embodiments, the determining the working mode of the integrated storage and charging system as the charging mode and the power consumption object corresponding to the charging mode in a case where the load rate is less than the first preset value includes: determining the charging mode as including charging the electrical device via the grid, where the power consumption object is the electrical device in a case where the load rate is less than the first preset value; and alternatively, determining the charging mode as including charging the electrical device via the grid and charging the energy storage apparatus via the grid and determining the power consumption objects as the electrical device and the energy storage apparatus correspondingly in a case where the load rate is less than the first preset value, and the state of charge value of the energy storage apparatus is less than a preset charge threshold, and/or the remaining state of energy value is less than a preset remaining energy threshold.

In an embodiment of the present disclosure, in one aspect, when the load rate is less than the first preset value, charging the electrical device via the grid can reduce an energy loss caused by the discharging of the energy storage apparatus, thereby further improving energy utilization efficiency; and in another aspect, when the load rate is less than the first preset value, and the state of charge value of the energy storage apparatus is less than the preset charge threshold, and/or the remaining state of energy value is less than the preset remaining energy threshold, charging the energy storage apparatus via the grid can fully utilize the charging capacity of the grid and improve the energy utilization efficiency.

In some embodiments, the integrated storage and charging system is connected to a DC bus, and the grid is connected to the DC bus via a low-voltage distribution transformer. The charge control method further includes: acquiring actual operating data of a point of connection, where the actual operating data includes voltage and frequency; providing reactive power support to the grid by the low-voltage distribution transformer in a case where an offset value of the voltage is greater than a second preset value; and providing active power support to the grid by the low-voltage distribution transformer in a case where an offset value of the frequency is greater than a third preset value.

In an embodiment of the present disclosure, in one aspect, when the offset value of the voltage exceeds the second preset value, the reactive power support is provided to the grid by the low-voltage distribution transformer, which helps to adjust a voltage level of the grid and ensure the stable operation of the grid; and in another aspect, when the offset value of the frequency exceeds the third preset value, the active power support is provided to the grid by the low-voltage distribution transformer, which helps to adjust a frequency level of the grid and ensure the stable operation of the grid.

In some embodiments, the charge control method also includes: sending a power outage event to the owner of the grid in a case where the current at the point of connection is 0 for the owner of the grid to choose whether to start a standby power supply; and supplying power to the electrical device by the low-voltage distribution transformer in response to the owner of the grid choosing to start the standby power supply.

In an embodiment of the present disclosure, in one aspect, when the current at the point of connection is 0, the power outage event is sent to the owner of the grid by the charge control apparatus of the integrated storage and charging system, which helps the owner of the grid to understand and handle power outage in time; and in another aspect, when the owner of the grid decides to start standby power supply, power is supplied to the electrical device by the low-voltage distribution transformer, which can reduce the impact of the power outage event on production and life and improve the reliability of a power supply system.

In a second aspect, an embodiment of the present disclosure provides a charge control apparatus, which is applied to an integrated storage and charging system, the integrated storage and charging system including an energy storage apparatus and a charging apparatus; where one end of the energy storage apparatus is connected to a grid via a DC bus; the other end of the energy storage apparatus is connected to the charging apparatus; the energy storage apparatus is configured to charge a battery of an electrical device via the charging apparatus, or to output electric energy in the energy storage apparatus to the DC bus; one end of the charging apparatus is connected to a charging gun, and the other end of the charging apparatus is connected to the DC bus; the charging apparatus is configured to transmit the electric energy in the electrical device to the energy storage apparatus and/or the grid, or to transmit the electric energy of the grid and/or the electric energy of the energy storage apparatus to the electrical device; and the charge control apparatus includes:
a first determination module, configured to determine a load rate of a point of connection where the integrated storage and charging system is connected to the grid;
a second determination module, configured to determine a working mode of the integrated storage and charging system and a power consumption object corresponding to the working mode based on the load rate of the point of connection; where the working mode includes a power supply mode and a charging mode; the power supply mode includes transmitting the electric energy in the electrical device to the energy storage apparatus and/or the grid, and transmitting the electric energy of the energy storage apparatus to the grid and/or the electrical device, and the charging mode includes transmitting the electric energy of the grid to the energy storage apparatus and/or the electrical device; and
a third determination module, configured to determine working parameters corresponding to the working mode of the integrated storage and charging system based on the power consumption object; where the power consumption object includes at least one of the energy storage apparatus, the grid and the electrical device; and
a control module, configured to control the integrated storage and charging system to work according to the working parameters.

In a third aspect, an embodiment of the present disclosure provides an integrated storage and charging system, the integrated storage and charging system including an energy storage apparatus and a charging apparatus; where one end of the energy storage apparatus is connected to a grid via a DC bus; the other end of the energy storage apparatus is connected to the charging apparatus; the energy storage apparatus is configured to charge a battery of an electrical device via the charging apparatus, or to output electric energy in the energy storage apparatus to the DC bus; one end of the charging apparatus is connected to a charging gun, and the other end of the charging apparatus is connected to the DC bus; the charging apparatus is configured to transmit electric energy in the electrical device to the energy storage apparatus and/or the grid, or to transmit the electric energy of the grid and/or the electric energy of the energy storage apparatus to the electrical device; where the charge control apparatus is configured to determine a load rate of a point of connection where the integrated storage and charging system is connected to the grid; determine a working mode of the integrated storage and charging system and a power consumption object corresponding to the working mode based on the load rate of the point of connection; where the working mode includes a power supply mode and a charging mode; the power supply mode includes transmitting the electric energy in the electrical device to the energy storage apparatus and/or the grid, and transmitting the electric energy of the energy storage apparatus to the grid and/or the electrical device, and the charging mode includes transmitting the electric energy of the grid to the energy storage apparatus and/or the electrical device; determining working parameters corresponding to the working mode of the integrated storage and charging system based on the power consumption object; where the power consumption object includes at least one of the energy storage apparatus, the grid and the electrical device; and controlling the integrated storage and charging system to work according to the working parameters.

In a fourth aspect, an embodiment of the present disclosure provides a computer-readable storage medium storing a computer program thereon, where the computer program, when executed by a processor, implements part or all of the steps of the above method.

In a fifth aspect, an embodiment of the present disclosure provides a computer program product, including computer programs or instructions, where the computer programs or instructions, when executed by a processor, implement part or all of the steps of the above method.

It should be understood that the above general description and the detailed descriptions that follow are exemplary and explanatory only and are not intended to limit the technical solutions of the present disclosure.

### DESCRIPTION OF DRAWINGS

The accompanying drawings herein are incorporated into the description and constitute part of the description, illustrate the embodiments conforming to the present disclosure, and are intended to explain the technical solutions of the present disclosure together with the description.
FIG. 1 is a schematic compositional and structural diagram I of an integrated storage and charging system provided in an embodiment of the present disclosure;
FIG. 2 is a schematic compositional and structural diagram II of an integrated storage and charging system provided in an embodiment of the present disclosure;
FIG. 3 is a flowchart of implementation of a charge control method provided in an embodiment of the present disclosure; and
FIG. 4 is a schematic compositional and structural diagram of a charge control apparatus provided in an embodiment of the present application.

### DETAILED DESCRIPTION

In order to make objectives, technical solutions and advantages of embodiments of the present disclosure clearer, the specific technical solutions of the present disclosure will be described below in detail with reference to accompanying drawings in the embodiments of the present disclosure. The following embodiments serve to illustrate the present disclosure but are not intended to limit the scope of the present disclosure.

Unless otherwise defined, all technical and scientific terms used in the present disclosure have the same meanings as those commonly understood by those skilled in the art to which the present disclosure belongs. The terms used in the present disclosure are for the purpose of describing embodiments of the present disclosure only and are not intended to limit the present disclosure.

In the following description, "some embodiments", "this embodiment", "an embodiment of the present disclosure", examples and the like are involved, which describe a subset of all possible embodiments, but it may be understood that "some embodiments" may be the same subset or different subsets of all the possible embodiments, and may be combined with each other without conflict.

If a similar description of "first/second" appears in the application document, the following description is added, in which the term "first/second/third" involved merely distinguishes similar objects, and does not represent a specific ordering for the objects. It may be understandable that "first/second/third" may interchange specific orderings or sequences, if permitted, so that an embodiment of the present disclosure described herein can be implemented in an order other than that illustrated or described herein.

Those skilled in the art will understand that, unless otherwise defined, all terms (including technical terms and scientific terms) used herein have the same meaning as generally understood by those skilled in the art to which the embodiments of the present disclosure belong. It should also be understood that terms, such as those defined in generic dictionaries, should be understood to have meanings consistent with those in the context of the prior art, and will not be interpreted in an idealized or overly formal sense unless they are specifically defined as herein.

An automobile charging pile equipped with a high-rate energy storage battery, due to properties of the internal high-rate energy storage battery, enables the integrated storage and charging system to collect power from a grid at low power (40-50 kilowatts (kW)) and charge an electrical device (e.g., an electric automobile) at high power (greater than or equal to 480kW).

Distribution transformer supply zones currently have the following problems: (1) insufficient capacity: the capacity of the distribution transformer supply zones is mainly distributed in a range of 200 to 1250 kilovolt-amperes (kVA), and the redundancy in daily use is usually 20% to 30%, that is, the redundant capacity of one distribution transformer supply zone is usually 40 to 375kVA, which is far from enough to support traditional high-power charging piles; (2) short-time heavy overload: power for daily use in the distribution transformer supply zone fluctuates greatly, and in most cases, a peak load rate during the evening peak in summer can rise to 90% to 110%, which poses a high safety risk and the risk of power outages due to insufficient capacity; (3) poor power quality: due to load fluctuations, the power supply in the distribution court may have problems such as temporary power outages, voltage instability, and frequency fluctuations; (4) poor response capability: for an upper-level grid, a general distribution transformer supply zone has poor dispatchability and flexibility; and (5) unstable distributed new energy: some of the distribution transformer supply zones have the problem that distributed photovoltaic power generation or wind power generation, due to their instability and unpredictable power generation, may lead to lots of wind or light curtailments or affect the power quality of a distribution network.

Based on this, an embodiment of the present disclosure provides a charge control method, a charge control apparatus, an integrated storage and charging system, a medium, and a program product, in one aspect, the integrated storage and charging system can flexibly adjust its working mode according to the load rate of the point of connection of the integrated storage and charging system to the grid, so that the integrated storage and charging system can optimize its operation according to the real-time energy demand and supply situation, thereby improving the electric energy utilization efficiency. In another aspect, the integrated storage and charging system can achieve energy self-sufficiency to a certain extent by integrating energy storage apparatuses.

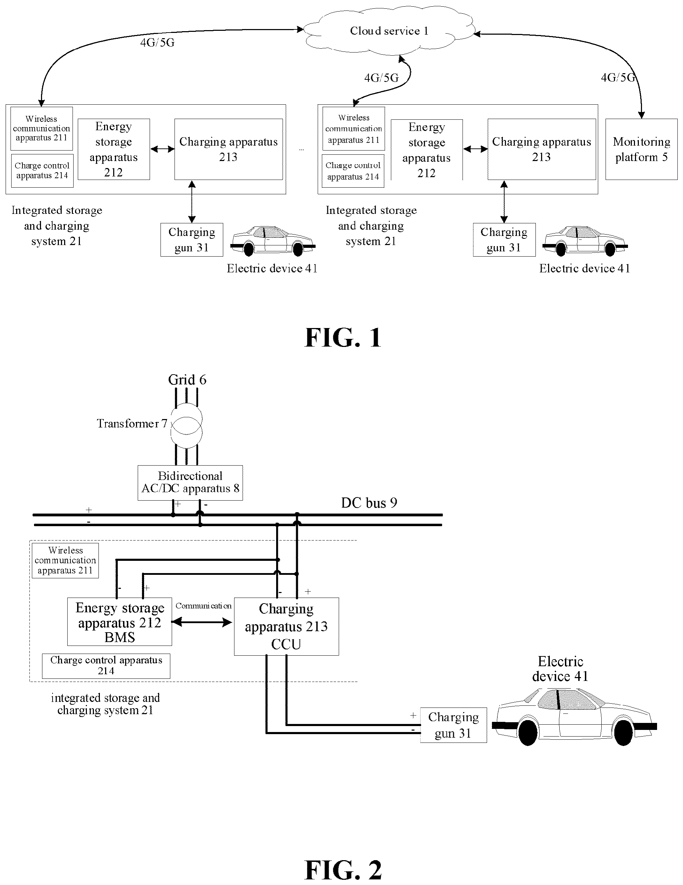

An embodiment of the present disclosure provides an integrated storage and charging system, as shown in FIGS. 1 and 2, the integrated storage and charging system 21 includes a charging apparatus 213, an energy storage apparatus 212 and a charge control apparatus 214; where taking an electrical device being an electric automobile as an example, this integrated storage and charging system is introduced; N integrated storage and charging systems 21 include N charging apparatuses 213, and lower portions of the N charging apparatuses include N charging guns 31 and N electric devices 41, where N is an integer greater than 1. The upstream of the N charging apparatuses includes cloud service 1, the integrated storage and charging system and the cloud service 1 perform information interaction, and the cloud service 1 and the monitoring platform 5 perform information interaction.

One end of the energy storage apparatus is connected to a grid via a DC bus; the other end of the energy storage apparatus is connected to the charging apparatus; the energy storage apparatus is configured to charge a battery of an electrical device via the charging apparatus, or to output electric energy in the energy storage apparatus to the DC bus; one end of the charging apparatus is connected to a charging gun, and the other end of the charging apparatus is connected to the DC bus; the charging apparatus is configured to transmit the electric energy in the electrical device to the energy storage apparatus and/or the grid, or to transmit the electric energy of the grid and/or the electric energy of the energy storage apparatus to the electrical device.

Taking the charging apparatus 213 as an example, the lower portion of the charging apparatus 213 includes the charging gun 31 and the electric device 41, where the charge control apparatus 214 includes at least a wireless communication apparatus 211, the energy storage apparatus 212 and the charging apparatus 213 therein, the energy storage apparatus 212 and the charging apparatus 213 can perform information interaction, and the wireless communication apparatus 211 communicates with the charge control apparatus 214 and the cloud service 1. One end of the energy storage apparatus 212 is connected to the DC bus 9 to output the electric energy in the energy storage apparatus 212 to the grid 6; the other end of the energy storage apparatus 212 is connected to the charging apparatus 213 to charge the electric device 41 with the charging apparatus 213 and the charging gun 31; and the energy storage apparatus 212 is configured to charge the electric device 41 with the charging apparatus 213, or to output the electric energy in the energy storage apparatus 212 to the DC bus 9.

The energy storage apparatus 212 further includes a battery management system (BMS) therein, where the BMS is responsible for monitoring states of a battery in the energy storage apparatus, such as voltage, current, temperature and battery health status.

The charging apparatus 213 includes a bidirectional direct current direct current converter (DC/DC) apparatus. One end of the charging apparatus 213 is connected to the charging gun 31, and the other end of the charging apparatus 213 is connected to the DC bus 9. The charging apparatus 213 is configured to transmit the electric energy in the electric device 41 to the energy storage apparatus 212 and/or the DC bus 9, or to transmit the electric energy of the DC bus 9 and/or the electric energy of the energy storage apparatus 212 to the electric device 41 with the bidirectional DC/DC apparatus. One end of a bidirectional alternating current direct current converter (AC/DC) apparatus 8 is connected to the grid 6, and the other end of the bidirectional AC/DC apparatus 8 is connected to the DC bus 9. The bidirectional AC/DC apparatus 8 is configured to convert the electric energy of the grid 6 into direct current and then transmit the direct current to the DC bus 9, or to convert the electric energy on the DC bus 9 into alternating current and then transmit the alternating current to the grid 6. The charging apparatus 213 further includes a charge control unit (CCU) therein.

In some embodiments, the charge control apparatus may be independently arranged outside the energy storage apparatus and a bidirectional DC/DC module in the integrated storage and charging system to control the operation of the integrated storage and charging system. For example, the charge control apparatus may be an EMS. In this case, the EMS may communicate with the BMS in the energy storage apparatus and the CCU in the bidirectional DC/DC module.

In some other embodiments, functions implemented by the charge control apparatus can also be integrated with each sub-module of the integrated storage and charging system (e.g., the energy storage apparatus and the bidirectional DC/DC module) to cooperatively control the operation of the integrated storage and charging system. For example, all or part of the functions implemented by the charge control apparatus are integrated in the CCU of the bidirectional DC/DC module. For another example, all or part of the functions implemented by the charge control apparatus are integrated in the BMS of the energy storage apparatus.

It should be noted that this system, which includes the energy storage apparatus and the charging apparatus, may be referred to as the integrated storage and charging system, or may be referred to as a integrated storage and charging machine or a integrated charging and discharging machine. The integrated storage and charging system including the energy storage apparatus and the charging apparatus supports multiple charging modes and can meet the charging needs of electrical devices in multiple scenarios. Furthermore, in a current market, different charging modes are provided to users at the same time by additionally configuring transformers or expanding the capacity of transformers. However, this method not only increases construction costs but also increases the occupied area. With this integrated storage and charging system including the energy storage apparatus and the charging apparatus, multiple charging modes can be provided to the users at the same time without adding the transformers, thereby reducing the construction costs.

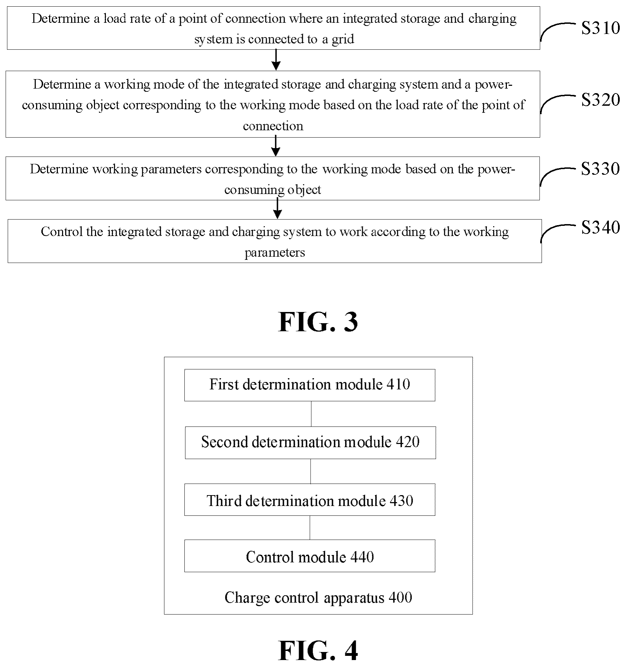

An embodiment of the present disclosure provides a charge control method, which is applied to an integrated storage and charging system. The integrated storage and charging system includes an energy storage apparatus and a charging apparatus; where one end of the energy storage apparatus is connected to a grid via a DC bus; the other end of the energy storage apparatus is connected to the charging apparatus; the energy storage apparatus is configured to charge a battery of an electrical device via the charging apparatus, or to output electric energy in the energy storage apparatus to the DC bus; one end of the charging apparatus is connected to a charging gun, and the other end of the charging apparatus is connected to the DC bus; the charging apparatus is configured to transmit the electric energy in the electrical device to the energy storage apparatus and/or the grid, or to transmit the electric energy of the grid and/or the electric energy of the energy storage apparatus to the electrical device. As shown in FIG. 3, the charge control apparatus may include the following steps S310 to S340, where:
in step S310, a load rate of a point of connection where the integrated storage and charging system is connected to the grid is determined.

Here, as shown in FIGS. 1 and 2, the integrated storage and charging system includes a charging apparatus 213 and an energy storage apparatus 212. The charging apparatus has an intelligent recognition function, which can automatically match appropriate charge current according to different electrical devices, thereby avoiding safety problems caused by excessive charge current. While implementing the charging function, the charging apparatus can also cooperatively work together with the energy storage apparatus to optimize energy utilization. For example, when a grid load is relatively low, the charging apparatus can use the electric energy stored in the energy storage apparatus to supply power to the grid, thus reducing the grid load; and when the grid load is relatively high, the charging apparatus can use the electric energy stored in the energy storage apparatus to supply power to the electrical device, thus reducing the burden on the grid. The energy storage apparatus mainly converts the electric energy into other forms of energy for storage, and releases the energy when needed. Through energy storage technology, stable operation of power at a supply side (e.g., a power plant), a transmission side (e.g., a grid), and a power consumption side (e.g., an electrical device) is implemented, thereby improving the energy utilization efficiency. The energy storage apparatus plays a role of peak load shifting in the grid, which can alleviate the impact of massive instantaneous charging of electric automobiles on the grid. By the charging and discharging management of the energy storage apparatus, a smooth transition of the grid load can be implemented, thus improving the stability and reliability of the operation of the grid.

Here, the load rate represents the busyness of a power supply line corresponding to the point of connection. In some embodiments, an actual load of the point of connection where the integrated storage and charging system is connected to the grid can be collected by a collector or a sensor, and the load rate of the point of connection can be determined according to a ratio of the actual load to a rated load. If the load rate of the point of connection is relatively high, it means that there are many electrical devices connected to the power supply line corresponding to the point of connection; and if the load rate of the point of connection is relatively low, it means that there are fewer electrical devices connected to the power supply line corresponding to the point of connection.

In step S320, a working mode of the integrated storage and charging system and a power consumption object corresponding to the working mode are determined based on the load rate of the point of connection.

Here, the working mode may include a power supply mode and a charging mode. The power consumption object corresponding to the power supply mode is the grid and/or the electrical device, and the power consumption object corresponding to the charging mode is the energy storage apparatus and/or the electrical device; where the power supply mode includes transmitting the electric energy in the electrical device to the energy storage apparatus and/or the grid, and transmitting the electric energy of the energy storage apparatus to the grid and/or the electrical device, and the charging mode transmits the electric energy of the grid to the energy storage apparatus and/or the electrical device. The electrical device may be a device that is driven by electric energy to work, for example, electronic devices with power batteries such as an electric automobile, an aircraft, a ship, an electric bicycle, and an electric toy that are powered by electric energy.

In some embodiments, according to the load rate of the point of connection, it can be determined whether the working mode of the integrated storage and charging system is the power supply mode or the charging mode, thereby determining the power consumption object corresponding to the power supply mode or the power consumption object corresponding to the charging mode. For example, in a case where the working mode is the power supply mode, the power consumption object may be the grid and/or the electrical device; and in a case where the working mode is the charging mode, the power consumption object may be the energy storage apparatus and/or the electrical device.

In some embodiments, when the load rate of the point of connection is relatively low, the integrated storage and charging system may be in the charging mode, which obtains the electric energy from the grid and stores the electric energy in the energy storage apparatus. When the load rate of the point of connection is relatively high or the grid is undersupplied, the integrated storage and charging system may enter the power supply mode, which supply power to the grid or the electrical device with the energy storage apparatus. In some cases, the integrated storage and charging system may be in the power supply mode and the charging mode at the same time. For example, when the load of the point of connection is moderate and the electricity price is relatively low, the integrated storage and charging system may simultaneously collect power from the grid and supply power to the electrical device.

In step S330, working parameters corresponding to the working mode are determined based on the power consumption object.

Here, the working parameters may include power supply parameters and charging parameters, where the power supply parameters include power supply power, and the charging parameters include charging power. In a case where the working mode is the power supply mode, the working parameter may be the power supply parameter; and in a case where the working mode is the charging mode, the working parameter may be the charging parameter.

It should be noted that since the power consumption object corresponding to the power supply mode may be the grid and/or the electrical device, the power supply power may be different for different power consumption objects; and since the power consumption object corresponding to the charging mode may be the energy storage apparatus and/or the electrical device, the charging power may be different for different power consumption objects.

In some embodiments, if the power consumption object is the grid, then the working parameter is determined as first power supply power in a case where the working mode of the integrated storage and charging system is determined as the power supply mode; and if the power consumption object is the electrical device, then the working parameter is determined as second power supply power in a case where the working mode of the integrated storage and charging system is determined as the power supply mode; where the first power supply power and the second power supply power may be equal or unequal.

In some embodiments, if the power consumption object is the energy storage apparatus, then the working parameter is determined as first charging power in a case where the working mode of the integrated storage and charging system is determined as the power supply mode; and if the power consumption object is the electrical device, then the working parameter is determined as second charging power in a case where the working mode of the integrated storage and charging system is determined as the charging mode; where the first charging power and the second charging power may be equal or unequal.

In step S340, the integrated storage and charging system is controlled to work according to the working parameters.

In some embodiments, after the working parameters are determined, the charge control apparatus of the integrated storage and charging system will manage the operation of the charging apparatus and the energy storage apparatus according to the working parameters. For example, in a case where the working mode of the integrated storage and charging system is the charging mode, the charge control apparatus will control the charging apparatus to obtain the electric energy from the grid at set charging power and time, and store the electric energy in the energy storage apparatus. In a case where the working mode of the integrated storage and charging system is the power supply mode, the charge control apparatus will control the energy storage apparatus to supply power to the grid and/or electrical device at set power supply power and time.

In some embodiments, if the power consumption object is the grid and the working mode of the integrated storage and charging system is the power supply mode, then the charge control apparatus controls the integrated storage and charging system to work at the first power supply power; if the power consumption object is the electrical device and the working mode of the integrated storage and charging system is the power supply mode, then the charge control apparatus controls the integrated storage and charging system to work at the second power supply power; if the power consumption object is the energy storage apparatus and the working mode of the integrated storage and charging system is the charging mode, then the charge control apparatus controls the integrated storage and charging system to work at the first charging power; and if the power consumption object is the electrical device and the working mode of the integrated storage and charging system is the charging mode, then the charge control apparatus controls the integrated storage and charging system to work at the second charging power.

In an embodiment of the present disclosure, in one aspect, the integrated storage and charging system can flexibly adjust its working mode according to the load rate of the point of connection where the integrated storage and charging system is connected to the grid, so that the integrated storage and charging system can optimize its operation according to the real-time energy demand and supply situation, thereby improving the electric energy utilization efficiency. In another aspect, the integrated storage and charging system can achieve energy self-sufficiency to a certain extent by integrating energy storage apparatuses.

In some embodiments, the implementation of step S320 in which "a working mode of the integrated storage and charging system and a power consumption object corresponding to the working mode are determined based on the load rate of the point of connection" may include the following steps S321 to S323, where:
In step S321, an estimated charging period of the electrical device is determined in response to a charging event of the electrical device.

Here, the charging event may be an event that a charging signal is received or an event that a charging message is received; where the charging signal may refer to a related signal that triggers the electrical device to be charged. In some embodiments, if the electrical device is the electric automobile, then the charging signal may be a signal triggered when a user inserts the charging gun into the electric automobile. The charging message may be a message related to charging of the electrical device set by a user on a display interface of a mobile terminal (e.g., a mobile phone, a computer, a tablet, etc.). In some embodiments, if the electrical device is the electric automobile, then the charging message may come from a charging request issued by a user via a user interface (e.g., a mobile phone application, a touch screen, etc.).

Here, the estimated charging period may refer to a to-be-charge period of the electrical device. The to-be-charge period may be a period starting at a current moment or a period starting at a future moment. In some embodiments, the integrated storage and charging system can estimate the estimated charging period of the electrical device according to contextual information of the charging event (e.g., user's historical charging habits, a current grid electricity price period, charging start time and charging end time set by the user, etc.).

In step S322, the load rate of the point of connection in the estimated charging period is determined based on the estimated charging period.

Here, the integrated storage and charging system can combine the estimated charging period and the current grid states (e.g., a real-time load, electricity price, etc.) to predict the load rate of the point of connection in the estimated charging period.

In step S323, a working mode of the integrated storage and charging system and a power consumption object corresponding to the working mode are determined based on the load rate of the point of connection in the estimated charging period.

In some embodiments, the integrated storage and charging system may decide whether to enter the power supply mode or the charging mode according to the predicted load rate of the point of connection in the estimated charging period. For example, if the load rate is relatively high, the integrated storage and charging system may prioritize to enter the power supply mode, which supplies power to the grid and/or electrical device with the energy storage apparatus to reduce the load burden on the grid. If the load rate is relatively low, the integrated storage and charging system may select to enter the charging mode, which obtains the electric energy from the grid and stores the electric energy in the energy storage apparatus.

In an embodiment of the present disclosure, in one aspect, by predicting the load rate of the point of connection in the estimated charging period according to the estimated charging period of the electrical device, the accuracy of the load rate can be improved; and in another aspect, by determining the working mode of the integrated storage and charging system according to the load rate of the point of connection in the estimated charging period, the integrated storage and charging system can quickly respond to various changes in power demand and flexibly adjust the working mode, which helps the integrated storage and charging system to better adapt to different power consumption scenarios and demands and improve the adaptability and reliability of the integrated storage and charging system.

In some embodiments, the implementation of step S322 in which "the load rate of the point of connection in the estimated charging period is determined based on the estimated charging period" may include the following steps S3221 to S3222, where:
In step S3221, the load rate of the point of connection in a first period is determined as a first load rate in a case where the estimated charging period falls within the first period of power supply by the grid;

Here, according to different power demands, a day is divided into different periods to determine the electricity prices in different periods. Next, it will be illustrated taking a day including a first period and a second period as an example. The first period represents a period with the highest power demand in a day. The first period may also be referred to as a power consumption peak period. The first period may include a period when the electricity price is relatively high and power consumption busy periods in the morning and afternoon.

In some embodiments, after the estimated charging period is determined, the load rate of the point of connection where the integrated storage and charging system is connected to the grid is predicted according to the estimated charging period falling within the first period of power supply by the grid, and the load rate of the point of connection in the first period is determined as the first load rate. It should be noted that if the estimated charging time falls within the first period of power supply by the grid, then the load rate of the point of connection is relatively high, that is, a current point of connection is in the power consumption busy period.

In step S3222, the load rate of the point of connection in a second period is determined as a second load rate in a case where the estimated charging period falls within the second period of power supply by the grid; where the first period and the second period are different.

Here, the first period and the second period being different may refer to that the first period and the second period have no intersection. The second period represents other periods in a day except the first period. The second period may also be referred to as a power consumption non-peak period. The second period may include a period when the electricity price is relatively low and power consumption idle periods in the late of night and at noon.

In some embodiments, after the estimated charging period is determined, the load rate of the point of connection where the integrated storage and charging system is connected to the grid is predicted according to the estimated charging period falling within the second period of power supply by the grid, and the load rate of the point of connection in the second period is determined as the second load rate. It should be noted that if the estimated charging time falls within the second period of power supply by the grid, then the load rate of the point of connection is relatively low, that is, a current point of connection is in the power consumption idle period.

In an embodiment of the present disclosure, by matching the estimated charging period with different periods of power supply by the grid, the load rate of the point of connection in different periods can be predicted more accurately, which helps the integrated storage and charging system to utilize energy more efficiently and reduce energy waste.

In some embodiments, the implementation of step S323 in which "a working mode of the integrated storage and charging system and a power consumption object corresponding to the working mode are determined based on the load rate of the point of connection in the estimated charging period" may include the following steps S3231 to S3233, where:
In step S3231, whether the load rate of the point of connection in the estimated charging period is greater than or equal to a first preset value is determined.

Here, the first preset value is a suitable value set according to the load rate of the point of connection, for example, 90%, 92%, 95%, etc. Next, it will be illustrated taking the first preset value of 90% as an example.

In some embodiments, if the load rate of the point of connection in the estimated charging period is 80%, then it is determined that the load rate 80% of the point of connection in the estimated charging period is less than the first preset value 90%; and if the load rate of the point of connection in the estimated charging period is 98%, then it is determined that the load rate 98% of the point of connection in the estimated charging period is greater than the first preset value 90%.

In step S3232, the working mode of the integrated storage and charging system is determined as the power supply mode and the power consumption object corresponding to the power supply mode is determined in a case where the load rate is greater than or equal to the first preset value.

Here, the power supply mode includes supplying power to the electrical device with the energy storage apparatus, and the power consumption object is the electrical device. If the load rate is greater than or equal to the first preset value, it indicates that the current power demand is relatively high, which may exceed the instant power supply capacity of the grid. In this case, the integrated storage and charging system will switch to the power supply mode, which uses the electric energy of the energy storage apparatus to supply power to the electrical device, which helps alleviate the burden on the grid and guarantee the stability of power supply.

In some embodiments, the power supply mode of the integrated storage and charging system is determined as including supplying power to the electrical device with the energy storage apparatus, and the power consumption object is determined as the electrical device in a case where the load rate 98% of the point of connection in the estimated charging period is greater than or equal to the first preset value 90%.

In step S3233, the charging mode of the integrated storage and charging system is determined as the charging mode and the power consumption object corresponding to the charging mode is determined in a case where the load rate is less than the first preset value.

Here, the charging mode includes charging the electrical device via the grid, and the power consumption object is the electrical device. If the load rate of the point of connection is less than the first preset value, it indicates that the current power demand is relatively low, and the power supply capacity of the grid is strong. In this case, the integrated storage and charging system will switch to the charging mode, which uses the remaining electric energy of the grid to charge the energy storage apparatus for future use.

In some embodiments, the charging mode of the integrated storage and charging system is determined as including charging the electrical device via the grid, and the power consumption object is determined as the electrical device in a case where the load rate 80% of the point of connection in the estimated charging period is less than the first preset value 90%.

In an embodiment of the present disclosure, by setting the first preset value, the integrated storage and charging system can flexibly adjust its working mode according to the load rate of the point of connection in the estimated charging period. When the load rate is high, the integrated storage and charging system can quickly switch to the power supply mode and supply power to the electrical device via the energy storage apparatus; while when the load rate is low, the integrated storage and charging system can choose the charging mode and charge the electrical device via the grid. This flexibility enables the integrated storage and charging system to better adapt to changes in the grid and the power demand of electrical device.

In some embodiments, the implementation of step S3232 in which "the working mode of the integrated storage and charging system is determined as the power supply mode and the power consumption object corresponding to the power supply mode is determined in a case where the load rate is greater than or equal to the first preset value" may include the following steps S3321 to S3323, where:
In step S3321, a current state of charge value and/or a remaining state of energy value of the energy storage apparatus are/is acquired in a case where the load rate is greater than or equal to the first preset value.

Here, the state of charge (SOC) is used for reflecting the remaining capacity of the energy storage apparatus, which refers to a ratio of the current remaining charge quantity of the energy storage apparatus to rated charge quantity. The remaining state of energy (SOE) value is used for reflecting the remaining energy of the battery, which refers to a ratio of the current remaining energy (releasable energy) of the battery to rated energy.

In some embodiments, the state of charge value and/or the remaining state of energy value of the energy storage apparatus can be determined by a battery management system in the energy storage apparatus in a case where the load rate of the point of connection is greater than or equal to the first preset value.

In step S3322, whether the energy storage apparatus is capable of supplying power to the grid based on the state of charge value and/or the remaining state of energy value is determined.

In some embodiments, the integrated storage and charging system will evaluate whether the energy storage apparatus has the capability to supply power to the grid according to the state of charge value and/or the remaining state of energy value. If the state of charge value is high and/or the remaining state of energy value is high, then it is determined that the energy storage apparatus is capable of supplying power to the grid; and if the state of charge value is low and/or the remaining state of energy value is low, it is determined that the energy storage apparatus is incapable of supplying power to the grid.

In step S3323, the power supply mode is determined as supplying power to the grid via the energy storage apparatus, and the power consumption object is determined as the grid in a case where it is determined that the energy storage apparatus is capable of supplying power to the grid.

In some embodiments, if the energy storage apparatus is capable of supplying power to the grid, the integrated storage and charging system will supply power to the grid via the energy storage apparatus to reduce the burden on the grid.

In an embodiment of the present disclosure, in one aspect, the integrated storage and charging system can accurately judge the power supply capacity of the energy storage apparatus based on the state of charge value and/or the remaining state of energy value of the energy storage apparatus, thereby avoiding attempting to supply power when the energy storage apparatus is out of power, causing energy waste; and in another aspect, when the load rate is high, if the energy storage apparatus has enough power, the energy storage apparatus can supply power to the grid, which helps to reduce the power supply burden on the grid, thereby enhancing the stability of the grid.

In some embodiments, the charge control method may further include step S3324, where:
In step S3324, the power supply mode is determined as supplying power to the electrical device via the energy storage apparatus, and the power consumption object is determined as the electrical device in a case where it is determined that the energy storage apparatus is incapable of supplying power to the grid.

In some embodiments, if the power of the energy storage apparatus is not enough to supply power to the grid, but is enough to supply power to the electrical device, the integrated storage and charging system will supply power to the electrical device via the energy storage apparatus to ensure the normal operation of the electrical device.

In an embodiment of the present disclosure, if the power of the energy storage apparatus is not enough to supply power to the grid, but is enough to supply power to the electrical device, power can be supplied to the electrical device to ensure the normal operation of the electrical device.

In some embodiments, the implementation of step S3233 in which "the charging mode of the integrated storage and charging system is determined as the charging mode and the power consumption object corresponding to the charging mode is determined in a case where the load rate is less than the first preset value" may include the following steps S3331 to S3332, where:
In step S3331, the charging mode is determined as including charging the electrical device via the grid and the power consumption object is determined as the electrical device in a case where the load rate is less than the first preset value.

In some embodiments, when the load rate of the point of connection is less than the first preset value, the power supply capacity of the grid is relatively strong. At this time, charging the electrical device via the grid can reduce an energy loss caused by the discharging of the energy storage apparatus, thereby further improving the energy utilization efficiency.

In step S3332, the charging mode is determined as including charging the electrical device via the grid and charging the energy storage apparatus via the grid and the power consumption objects are determined as the electrical device and the energy storage apparatus correspondingly in a case where the load rate is less than the first preset value, and the state of charge value of the energy storage apparatus is less than a preset charge threshold, and/or the remaining state of energy value is less than a preset remaining energy threshold.

In some embodiments, when the load rate of the point of connection is less than the first preset value, the state of charge value of the energy storage apparatus is compared with the preset charge threshold, and/or the remaining state of energy value is compared with the preset remaining energy threshold; and the charging mode is determined as including charging the electrical device via the grid and charging the energy storage apparatus via the grid and the power consumption objects are determined as the electrical device and the energy storage apparatus correspondingly in a case where the load rate is less than the first preset value, and the state-of-charge value of the energy storage apparatus is less than the preset charge threshold, and/or the remaining energy state value is less than the preset remaining energy threshold. Next, it will be illustrated taking the preset charge threshold being 50% and the preset remaining energy threshold being 50% as an example.

In some embodiments, if the state of charge value of the energy storage apparatus is 40%, then the state of charge value 40% is less than the preset charge threshold 50%, thereby determining the charging mode as including charging the electrical device via the grid and charging the energy storage apparatus via the grid, and determining the power consumption objects as the electrical device and the energy storage apparatus correspondingly.

In some embodiments, if the remaining state of energy value of the energy storage apparatus is 30%, then the remaining state of energy value 30% is less than the preset remaining energy threshold 50%, thereby determining the charging mode as including charging the electrical device via the grid and charging the energy storage apparatus via the grid, and determining the power consumption objects as the electrical device and the energy storage apparatus correspondingly.

In an embodiment of the present disclosure, in one aspect, when the load rate is less than the first preset value, charging the electrical device via the grid can reduce an energy loss caused by the discharging of the energy storage apparatus, thereby further improving energy utilization efficiency; and in another aspect, when the load rate is less than the first preset value, and the state of charge value of the energy storage apparatus is less than the preset charge threshold, and/or the remaining state of energy value is less than the preset remaining energy threshold, charging the energy storage apparatus via the grid can fully utilize the charging capacity of the grid and improve the energy utilization efficiency.

In some embodiments, the integrated storage and charging system is connected to a DC bus, and the grid is connected to the DC bus via a low-voltage distribution transformer. The charge control method may further include the following steps S351 to S353, where:
in step S351, actual operating data of a point of connection is acquired.

Here, the actual operating data includes voltage and frequency.

In some embodiments, the integrated storage and charging system will acquire the actual operating data of the point of connection. These actual operating data usually includes voltage and frequency, which are important indicators for evaluating the operating state of the grid.

In step S352, reactive power support is provided to the grid by the low-voltage distribution transformer in a case where an offset value of the voltage is greater than a second preset value.

Here, the second preset value may be a suitable value set according to the offset value of the voltage. The reactive power support may refer to the injection of reactive power into the grid by the low-voltage distribution transformer to adjust the voltage level of the grid. In a power system, the flow of reactive power is essential to maintaining voltage stability.

In some embodiments, voltage offset is typically caused by a reactive power imbalance in the grid. The integrated storage and charging system will check whether the offset value of the voltage is greater than the second preset value. If the voltage offset is too large (i.e., exceeding the second preset value), the integrated storage and charging system will provide the reactive power support to the grid by the low-voltage distribution transformer to stabilize the reactive power imbalance of the grid.

In step S353, active power support is provided to the grid by the low-voltage distribution transformer in a case where an offset value of the frequency is greater than a third preset value.

Here, the third preset value may be a suitable value set according to the offset value of the voltage. The active power support may refer to the injection of active power into the grid by the low-voltage distribution transformer to adjust the frequency of the grid. In a power system, the active power is actually converted and used power, which can be involved in the conversion and transmission of electric energy.

In some embodiments, frequency offset is typically caused by an active power imbalance in the grid. The integrated storage and charging system will check whether the offset value of the frequency is greater than the third preset value. If the frequency offset is too large (i.e., exceeding the third preset value), the integrated storage and charging system will provide the active power support to the grid by the low-voltage distribution transformer to stabilize the active power imbalance of the grid.

In an embodiment of the present disclosure, in one aspect, when the offset value of the voltage exceeds the second preset value, the reactive power support is provided to the grid by the low-voltage distribution transformer, which helps to adjust a voltage level of the grid and ensure the stable operation of the grid; and in another aspect, when the offset value of the frequency exceeds the third preset value, the active power support is provided to the grid by the low-voltage distribution transformer, which helps to adjust a frequency level of the grid and ensure the stable operation of the grid.

In some embodiments, the charge control method may further include the following steps S361 to S362, where:
In step S361, a power outage event is sent to the owner of the grid in a case where the current at the point of connection is 0 for the owner of the grid to choose whether to start standby power supply.

Here, when the current at the point of connection is 0, the integrated storage and charging system determines that a power outage event may have occurred. This may be caused by grid failure, power supply line failure, etc. The standby power supply may come from a standby generator, an energy storage power station, transmission from an adjacent grid, or other standby power sources.

In some embodiments, when the current at the point of connection is 0, the charge control apparatus of the integrated storage and charging system will send a power outage event to the grid to inform the owner of the grid that the current point of connection has lost power supply; and after receiving the power outage event, the owner of the grid will evaluate the standby power supply resources and decide whether to start the standby power supply.

In step S362, power is supplied to the electrical device by the low-voltage distribution transformer in response to the owner of the grid choosing to start the standby power supply.

In some embodiments, if the owner of the grid decides to start the standby power supply, then the standby power supply will supply power to the electrical device by the low-voltage distribution transformer.

In an embodiment of the present disclosure, in one aspect, when the current at the point of connection is 0, the power outage event is sent to the owner of the grid by the charge control apparatus of the integrated storage and charging system, which helps the owner of the grid to understand and handle power outage in time; and in another aspect, when the owner of the grid decides to start standby power supply, power is supplied to the electrical device by the low-voltage distribution transformer, which can reduce the impact of the power outage event on production and life and improve the reliability of a power supply system.

In some embodiments, in a case where the current at the point of connection is 0, a power outage event is sent to a cloud platform for the user to choose whether to continue to supply power to the electrical device; and power is supplied to the electrical device via the energy storage apparatus in response to the user selecting to continue to supply power to the electrical device.

In some embodiments, when the current at the point of connection is 0, the charge control apparatus of the integrated storage and charging system will send a power outage event to a cloud platform to inform the cloud platform that the current point of connection has lost power supply; and after receiving the power outage event, the cloud platform may notify the user via a user interface (e.g., a mobile phone application, a web page, etc.). At this time, the user can select whether to continue to supply power to the electrical device. If the user selects to continue to supply power to the electrical device, then the integrated storage and charging system will use its built-in energy storage apparatus (e.g., a battery pack) to supply power to the electrical device.

In an embodiment of the present disclosure, in one aspect, when the current at the point of connection is 0, the power outage event is sent to the owner of the grid by the charge control apparatus of the integrated storage and charging system, which helps the owner of the grid to understand and handle power outage in time; and in another aspect, when the owner of the grid decides to start standby power supply, power is supplied to the electrical device by the low-voltage distribution transformer, which can reduce the impact of the power outage event on production and life and improve the reliability of a power supply system.

High-power charging piles in the related art have high requirements for the grid, that is, the grid needs to provide capacity greater than or equal to 480kVA. The high-power charging piles have a large impact on the grid when operating at a full load, that is, the short-time load fluctuation is greater than or equal to 480kVA. The energy storage apparatus of a high-power DC coupling storage and charging system (that is, the above-mentioned integrated storage and charging system) has the energy storage capability, but the high-power DC coupling storage and charging system has redundancy in regulation capability for the grid, that is, the utilization rate of the regulation capability is relatively low.

In an embodiment of the present disclosure, corresponding control functions are configured using the flexibility and reverse output capability of the high-power DC coupling storage and charging system. These control functions are implemented by a controller (i.e., the above-mentioned charge control apparatus) of the high-power DC coupling storage and charging system, thereby supporting a distribution network in a distribution transformer supply zone in addition to implementing the charging of the electrical device.

Here, the flexibility may refer to that the output power and energy flow direction of the distribution network can be flexibly adjusted according to the actual needs of the distribution network in the distribution transformer supply zone. The reverse output may refer to that when there is a power shortage or load peak in the distribution network of the distribution transformer supply zone, the high-power DC coupling storage and charging system can release the stored electric energy to the distribution network with the reverse output capability to alleviate the power shortage or reduce the impact of the load peak on the distribution network of the distribution transformer supply zone.

The high-power DC coupling storage and charging system in an embodiment of the present disclosure has the following functions: 1. emergency support for distribution network; 2. electric energy quantity governance; and 3. power demand response. The emergency support for distribution network is mainly implemented by outputting electric energy reversely to the grid by the high-power DC coupling storage and charging system. The electric energy quantity governance is mainly to provide active and reactive compensation for the grid by the high-power DC coupling storage and charging system, and can provide the functions of the standby power supply when a power supply line cannot supply power normally due to failure or maintenance. The power demand response is to mainly adjust the quantity of power procured from the grid according to the power consumption of a power consumption region. If the power consumption in the power consumption region is high, the storage and charging system will procure less power from the grid. If the power consumption in the power consumption region is high, the storage and charging system will procure more power from the grid.

The emergency support for distribution network is to solve the problem of short-term heavy overload, and it is possible to configure a distribution network monitoring function, a bidirectional output function at grid entry point, a heavy overload grade evaluation function, and an output power regulation function. The distribution network monitoring function can be implemented by monitoring the operating states of the distribution network, for example, the voltage, current, power, frequency, etc. of each node. The bidirectional output function at grid entry point can implement the bidirectional flow of electric energy at a grid entry point where distributed energy (e.g., photovoltaic power generation, wind power generation, etc.) is connected to the distribution network. For example, when it is sunny or blows strongly, excess electric energy can be transmitted into the grid, while when it is cloudy or windless, the electric energy can be obtained from the grid. The heavy overload grade evaluation function can be implemented by collecting the voltage, current, power and other data of the distribution network in real time, determining whether the distribution network is in a heavy overload state, and dividing the degree of heavy overload of the distribution network into different grades. The output power regulation function can be implemented by real-time monitoring of the operating state of the distribution network and flexibly regulating the output power of the distributed energy in combination with the output properties of the distributed energy. Grading is performed according to the severity of the heavy overload, and different response methods are made for different grades. All the following proportions are examples. The data can be adjusted according to the actual situation in actual application. At grade I, the load rate of the point of connection of the grid reaches 80%-90%, and the power collection power of the controller of the integrated storage and charging system is reduced by 10%-80%. At grade II, the load rate of the point of connection of the grid reaches 90%-95%, and the controller of the integrated storage and charging system stops collecting power. At grade III, the load rate of the point of connection of the grid reaches 95%-100%, and the controller of the integrated storage and charging system supplies power to the grid, where the power supply power is 20%-80% * maximum reverse power supply power. At grade IV, the load rate of the point of connection of the grid is ≥100%, and the controller of the integrated storage and charging system supplies power to the grid at the maximum reverse power supply power.

The electric energy quantity governance is to solve the problems of poor power quality and temporary power outages caused by load fluctuations, and it is possible to configure a power factor monitoring function, a grid frequency monitoring function, a reactive power support function, a power outage monitoring function and a power outage standby function of the distribution network. reactive power support is provided according to different power factor grades. For example, when the power factor of the distribution network is less than a set threshold, it indicates that there is a relatively high reactive power demand in the grid. According to different power factors, the reactive power support of the distribution network is optimized. According to different grid frequencies, power is outputted by means of negative feedback regulation. For example, when the grid frequency is greater than a preset threshold, it indicates that there is excess active power in the grid, and the output power of a generator or other distributed energy is reduced by the negative feedback regulation. When a power outage in the grid is detected, the integrated storage and charging system can start automatically, supply power to the grid reversely with the maximum reverse power supply power, and supply power to the distribution network instead of the distribution transformer of the grid.

The power demand response is to solve the problem of poor demand response capability of the distribution network, and it is possible to configure a communication function and a demand response calculation module. The power regulation situation is judged according to the demand of the grid and its own working conditions.

The embodiments of the present disclosure can implement vehicle-to-grid (V2G) functional mode optimization. For example, electric automobiles are charged when the grid load is low and the electricity price is low to store excess energy; while when the grid load is high and the electricity price is high, vehicles discharge to the grid to implement energy feedback.

In the embodiments of the present disclosure, distributed photovoltaic integration can be implemented, where the distributed photovoltaic integration refers to a process of effectively utilizing and consuming electric energy generated by a distributed photovoltaic power generation system. The distributed photovoltaic power generation system is a photovoltaic power generation system installed at a user site or close to a power consumption site. The distributed photovoltaic power generation system uses photovoltaic modules to convert solar energy into electric energy, and converts direct current into alternating current with an inverter, and finally connects the alternating current to the grid for power supply or for private use.

Compared with the prior art, the embodiments of the present disclosure have the following advantages:
1. The integrated storage and charging system in the embodiments of the present disclosure can reduce the burden on the distribution transformer supply zone.
2. The embodiments of the present disclosure solve the problems of insufficient capacity and poor power quality during peak hours in the distribution transformer supply zone.
3. The embodiments of the present disclosure increase the demand response capability for common distribution transformer supply zones.
4. The embodiments of the present disclosure increase the flexibility of the common distribution transformer supply zone and the capability to integrate new distributed energy.

Based on the foregoing embodiments, the embodiments of the present disclosure provide a schematic compositional and structural diagram of a charge control apparatus. The apparatus includes each module included and each unit included in each module. The modules and the units can be implemented by a processor on a computer device. Of course, they can also be implemented by a specific logic circuit. In the implementation process, the processor may be a central processing unit (CPU), a microprocessor unit (MPU), a digital signal processor (DSP) or a field programmable gate array (FPGA), etc.

A charge control apparatus provided in an embodiment of the present disclosure is applied to an integrated storage and charging system. The integrated storage and charging system includes an energy storage apparatus and a charging apparatus; where one end of the energy storage apparatus is connected to a grid via a DC bus; the other end of the energy storage apparatus is connected to the charging apparatus; the energy storage apparatus is configured to charge a battery of an electrical device via the charging apparatus, or to output electric energy in the energy storage apparatus to the DC bus; one end of the charging apparatus is connected to a charging gun, and the other end of the charging apparatus is connected to the DC bus; the charging apparatus is configured to transmit the electric energy in the electrical device to the energy storage apparatus and/or the grid, or to transmit the electric energy of the grid and/or the electric energy of the energy storage apparatus to the electrical device. As shown in FIG. 4, the charge control apparatus 400 includes:
a first determination module 410, configured to determine a load rate of a point of connection where the integrated storage and charging system is connected to the grid;
a second determination module 420, configured to determine a working mode of the integrated storage and charging system and a power consumption object corresponding to the working mode based on the load rate of the point of connection; where the working mode includes a power supply mode and a charging mode; the power supply mode includes transmitting the electric energy in the electrical device to the energy storage apparatus and/or the grid, and transmitting the electric energy of the energy storage apparatus to the grid and/or the electrical device, and the charging mode includes transmitting the electric energy of the grid to the energy storage apparatus and/or the electrical device;
a third determination module 430, configured to determine working parameters corresponding to the working mode of the integrated storage and charging system based on the power consumption object; where the power consumption object includes at least one of the energy storage apparatus, the grid and the electrical device; and
a control module 440, configured to control the integrated storage and charging system to work according to the working parameters.

In some embodiments, the second determination module 420 includes: a first determination unit, configured to determine an estimated charging period of the electrical device in response to a charging event of the electrical device; a second determination unit, configured to determine the load rate of the point of connection in the estimated charging period based on the estimated charging period; and a third determination unit, configured to determine the working mode of the integrated storage and charging system and the power consumption object corresponding to the working mode based on the load rate of the point of connection in the estimated charging period.

In some embodiments, the second determination unit includes: a first determination subunit, configured to determine the load rate of the point of connection in a first period of power supply by the grid as a first load rate in a case where the estimated charging period falls within the first period; and a second determination subunit, configured to determine the load rate of the point of connection in a second period of power supply by the grid as a second load rate in a case where the estimated charging period falls within the second period; where the first period and the second period are different.

In some embodiments, the third determination unit includes: a third determination subunit, configured to determine whether the load rate of the point of connection in the estimated charging period is greater than or equal to a first preset value; a fourth determination subunit, configured to determine the working mode of the integrated storage and charging system as the power supply mode and determine the power consumption object corresponding to the power supply mode in a case where the load rate is greater than or equal to the first preset value; where the power supply mode includes supplying power to the electrical device via the energy storage apparatus, and the power consumption object is the electrical device; and a fifth determination subunit, configured to determine the working mode of the integrated storage and charging system as the charging mode and determine the power consumption object corresponding to the charging mode in a case where the load rate is less than the first preset value; where the charging mode includes charging the electrical device via the grid, and the power consumption object is the electrical device.

In some embodiments, the fourth determination subunit is further configured to acquire a current state of charge value and/or a remaining state of energy value of the energy storage apparatus in a case where the load rate is greater than or equal to the first preset value; determine whether the energy storage apparatus is capable of supplying power to the grid based on the state of charge value and/or the remaining state of energy value; determine the power supply mode as supplying power to the grid with the energy storage apparatus, and determine the power consumption object as the grid in a case where it is determined that the energy storage apparatus is capable of supplying power to the grid.

In some embodiments, the fourth determination subunit is further configured to determine the power supply mode as supplying power to the electrical device with the energy storage apparatus, and determine the power consumption object as the electrical device in a case where it is determined that the energy storage apparatus is incapable of supplying power to the grid.

In some embodiments, the fifth determination subunit is further configured to determine the charging mode as including charging the electrical device via the grid, and determine the power consumption object as the electrical device in a case where the load rate is less than the first preset value; and alternatively, determine the charging mode as including charging the electrical device via the grid and charging the energy storage apparatus via the grid, and determine the power consumption objects as the electrical device and the energy storage apparatus correspondingly in a case where the load rate is less than the first preset value, and the state of charge value of the energy storage apparatus is less than a preset charge threshold, and/or the remaining state of energy value is less than a preset remaining energy threshold.

In some embodiments, the integrated storage and charging system is connected to a DC bus, and the grid is connected to the DC bus by a low-voltage distribution transformer. The charge control apparatus 400 further includes: an acquisition module, configured to acquire actual operating data of a point of connection, where the actual operating data includes voltage and frequency; a first providing module, configured to provide reactive power support to the grid via a low-voltage distribution transformer in a case where an offset value of the voltage is greater than a second preset value; and a second providing module, configured to provide active power support to the grid via the low-voltage distribution transformer in a case where an offset value of the frequency is greater than a third preset value.

In some embodiments, the charge control apparatus 400 further includes: a first sending module, configured to send a power outage event to the owner of the grid in a case where the current at the point of connection is 0 for the owner of the grid to choose whether to start a standby power supply; and a first power supply module, configured to supply power to the electrical device via the low-voltage distribution transformer in response to the owner of the grid choosing to start the standby power supply.

The description of the above apparatus embodiments is similar to the description of the above method embodiments and has similar beneficial effects as the method embodiments. In some embodiments, the functions or modules included in the apparatus provided in the embodiments of the present disclosure can be used for executing the method described in the above method embodiments. For technical details not disclosed in the apparatus embodiments of the present disclosure, refer to the description of the method embodiments of the present disclosure for understanding.

It should be noted that in the embodiments of the present disclosure, the above method may also be stored in a computer-readable storage medium if it is implemented in the form of a software functional module and sold or used as a separate product. Based on such understanding, the technical solutions of the embodiments of the present disclosure essentially, or a part of the technical solutions that contributes to the related art, may be embodied in the form of a software product which is stored in a storage medium and includes some instructions for causing a computer device (which may be, e.g., a personal computer, a server, or a network device) to execute all or some of the methods according to each embodiment of the present disclosure. The aforementioned storage medium includes various media that can store program codes, such as a USB drive, mobile hard disk, a read only memory (ROM), a magnetic disk or compact disc. Thus, the embodiments of the present disclosure are not limited to any specific hardware, software or firmware, or any combination of the hardware, software and firmware.

An embodiment of the present disclosure provides a computer-readable storage medium storing a computer program thereon, where the computer program, when executed by a processor, implements part or all of the steps of the above method. The computer-readable storage medium may be transitory or non-transitory.

An embodiment of the present disclosure provides a computer program, including a computer-readable code, where the computer-readable code, when running in a computer device, is executed by a processor in the computer device to implement some or all of the steps of the above method.

An embodiment of the present disclosure provides a computer program product, including computer programs or instructions, where the computer programs or instructions, when executed by a processor, implement the steps of the above method.

The computer program product may be implemented in hardware, software, or a combination thereof. In some embodiments, the computer program product is embodied as a computer storage medium. In some other embodiments, the computer program product is embodied as a software product, e.g., a software development kit (SDK) and the like.

It should be pointed out here that the above description of the various embodiments tends to emphasize the differences between the various embodiments, and their same or similar aspects can be referenced to each other. The description of the above embodiments of the device, storage medium, computer program, and computer program product is similar to the description of the above method embodiments and has similar beneficial effects as the method embodiments. For technical details not disclosed in the embodiments of the device, storage medium, computer program, and computer program product of the present disclosure, please refer to the description of the method embodiments of the present disclosure for understanding.

It should be understood that references throughout the specification to "one embodiment" or "an embodiment" imply that specific features, structures, or characteristics related to the embodiment are included in at least one embodiment of the present disclosure. Thus, "in one embodiment" or "in an embodiment" that appears throughout the specification may not necessarily refer to the same embodiment. In addition, these specific features, structures, or characteristics may be combined in one or more embodiments in any suitable manner. It should be understood that in the various embodiments of the present disclosure, the size of the serial numbers of the above steps/processes does not imply the order of execution, and the execution order of each step/process should be determined by its function and internal logic, and should not constitute any limitations on the implementation process of the embodiment of the present disclosure. The above serial numbers of the embodiment of the present disclosure are only for description and do not represent the advantages and disadvantages of the embodiments.

It should be noted that terms "including", "containing", or any other variations in the application are intended to cover non-exclusive inclusion, such that a process, method, item or apparatus that includes a series of elements not only includes those elements, but also other elements that are not explicitly listed, or further include elements inherent in such the process, method, item or apparatus. Without more limitations, elements defined by a statement "including one" do not exclude the existence of other identical elements in the process, method, item or apparatus that includes the said elements.

In several embodiments provided in the present disclosure, it should be understood that the disclosed system, device and method may be implemented in other ways. The device embodiments described above are only illustrative. For example, dividing of units is only a kind of logical function dividing, and there may be other dividing modes in actual implementation. For example, the plurality of units or components can be combined or integrated into another system, or some features can be ignored or not executed. In addition, the coupling, direct coupling, or communication connection between the various components displayed or discussed can be indirect coupling or communication connection via some interfaces, device or units, which can be electrical, mechanical, or other forms.

The units mentioned above as separate components may be, or may not be physically separated, and the parts displayed as units may be, or may not be physical units; they may be located in one place or distributed onto a plurality of network units; and some or all of the units can be selected according to actual needs to achieve the purpose of the solution of this embodiment. In addition, all functional units in the embodiments of the present disclosure may be integrated into one processing unit, or each unit may serve as a separate unit, or two or more units may be integrated into one unit. The integrated units mentioned above may be implemented in a hardware form or in a form of hardware and software functional units.

The above is only an implementation of the present disclosure, but the scope of protection of the present disclosure is not limited to this. Any changes or replacements that can be easily thought of by technical personnel familiar with the technical field within the technical scope disclosed in the present disclosure needs to be covered within the scope of protection of the present disclosure.

## Claims

1. A charge control method, applied to an integrated storage and charging system, the integrated storage and charging system comprising an energy storage apparatus and a charging apparatus; wherein
one end of the energy storage apparatus is connected to a grid via a DC bus; the other end of the energy storage apparatus is connected to the charging apparatus; the energy storage apparatus is configured to charge a battery of an electrical device via the charging apparatus, or to output electric energy in the energy storage apparatus to the DC bus;
one end of the charging apparatus is connected to a charging gun, and the other end of the charging apparatus is connected to the DC bus; the charging apparatus is configured to transmit electric energy in the electrical device to the energy storage apparatus and/or the grid, or to transmit the electric energy of the grid and/or the electric energy of the energy storage apparatus to the electrical device;
the charge control method comprises:
determining a load rate of a point of connection where the integrated storage and charging system is connected to the grid;
determining a working mode of the integrated storage and charging system and a power consumption object corresponding to the working mode based on the load rate of the point of connection; wherein the working mode comprises a power supply mode and a charging mode; the power supply mode comprises transmitting the electric energy in the electrical device to the energy storage apparatus and/or the grid, and transmitting the electric energy of the energy storage apparatus to the grid and/or the electrical device, and the charging mode comprises transmitting the electric energy of the grid to the energy storage apparatus and/or the electrical device;
determining working parameters corresponding to the working mode of the integrated storage and charging system based on the power consumption object; wherein the power consumption object comprises at least one of the energy storage apparatus, the grid, and the electrical device; and
controlling the integrated storage and charging system to work according to the working parameters.

2. The charge control method according to claim 1, wherein the determining a working mode of the integrated storage and charging system and a power consumption object corresponding to the working mode based on the load rate of the point of connection comprises:
determining an estimated charging period of the electrical device in response to a charging event of the electrical device;
determining the load rate of the point of connection in the estimated charging period based on the estimated charging period; and
determining the working mode of the integrated storage and charging system and the power consumption object corresponding to the working mode based on the load rate of the point of connection in the estimated charging period.

3. The charge control method according to claim 2, wherein the determining the load rate of the point of connection in the estimated charging period based on the estimated charging period comprises:
determining the load rate of the point of connection in a first period of power supply by the grid as a first load rate in a case where the estimated charging period falls within the first period;
determining the load rate of the point of connection in a second period of power supply by the grid as a second load rate in a case where the estimated charging period falls within the second period;
wherein the first period and the second period are different.

4. The charge control method according to claim 2 or 3, wherein the determining the working mode of the integrated storage and charging system and the power consumption object corresponding to the working mode based on the load rate of the point of connection in the estimated charging period comprises:
determining whether the load rate of the point of connection in the estimated charging period is greater than or equal to a first preset value;
determining the working mode of the integrated storage and charging system as the power supply mode and the power consumption object corresponding to the power supply mode in a case where the load rate is greater than or equal to the first preset value; wherein the power supply mode comprises supplying power to the electrical device via the energy storage apparatus, and the power consumption object is the electrical device; and
determining the working mode of the integrated storage and charging system as the charging mode and the power consumption object corresponding to the charging mode in a case where the load rate is less than the first preset value; wherein the charging mode comprises charging the electrical device via the grid, and the power consumption object is the electrical device.

5. The charge control method according to claim 4, wherein the determining the working mode of the integrated storage and charging system as the power supply mode and the power consumption object corresponding to the power supply mode in a case where the load rate is greater than or equal to the first preset value comprises:
acquiring a current state of charge value and/or a remaining state of energy value of the energy storage apparatus in a case where the load rate is greater than or equal to the first preset value;
determining whether the energy storage apparatus is capable of supplying power to the grid based on the state of charge value and/or the remaining state of energy value;
determining the power supply mode as supplying power to the grid via the energy storage apparatus and determining the power consumption object as the grid in a case where it is determined that the energy storage apparatus is capable of supplying power to the grid.

6. The charge control method according to any of claims 1 to 5, wherein the method further comprises:
determining the power supply mode as supplying power to the electrical device via the energy storage apparatus and determining the power consumption object as the electrical device in a case where it is determined that the energy storage apparatus is incapable of supplying power to the grid.

7. The charge control method according to claim 4 or 5, wherein the determining the working mode of the integrated storage and charging system as the charging mode and the power consumption object corresponding to the charging mode in a case where the load rate is less than the first preset value comprises:
determining the charging mode as comprising charging the electrical device via the grid and determining the power consumption object as the electrical device in a case where the load rate is less than the first preset value; and
alternatively, determining the charging mode as comprising charging the electrical device via the grid and charging the energy storage apparatus via the grid and determining the power consumption objects as the electrical device and the energy storage apparatus correspondingly in a case where the load rate is less than the first preset value, and the state of charge value of the energy storage apparatus is less than a preset charge threshold, and/or the remaining state of energy value is less than a preset remaining energy threshold.

8. The charge control method according to any one of claims 1 to 7, wherein the integrated storage and charging system is connected to a DC bus, and the grid is connected to the DC bus via a low-voltage distribution transformer, and the method further comprises:
acquiring actual operating data of the point of connection, wherein the actual operating data comprises voltage and frequency;
providing reactive power support to the grid by the low-voltage distribution transformer in a case where an offset value of the voltage is greater than a second preset value; and
providing active power support to the grid by the low-voltage distribution transformer in a case where an offset value of the frequency is greater than a third preset value.

9. The charge control method according to claim 8, wherein the method further comprises:
sending a power outage event to the owner of the grid in a case where the current at the point of connection is 0 for the owner of the grid to choose whether to start standby power supply; and
supplying power to the electrical device by the low-voltage distribution transformer in response to the owner of the grid choosing to start the standby power supply.

10. A charge control apparatus, applied to an integrated storage and charging system, the integrated storage and charging system comprising an energy storage apparatus and a charging apparatus; wherein
one end of the energy storage apparatus is connected to a grid via a DC bus; the other end of the energy storage apparatus is connected to the charging apparatus; the energy storage apparatus is configured to charge a battery of an electrical device via the charging apparatus, or to output electric energy in the energy storage apparatus to the DC bus;
one end of the charging apparatus is connected to a charging gun, and the other end of the charging apparatus is connected to the DC bus; the charging apparatus is configured to transmit electric energy in the electrical device to the energy storage apparatus and/or the grid, or to transmit the electric energy of the grid and/or the electric energy of the energy storage apparatus to the electrical device;
the charge control apparatus comprises:
a first determination module, configured to determine a load rate of a point of connection where the integrated storage and charging system is connected to the grid;
a second determination module, configured to determine a working mode of the integrated storage and charging system and a power consumption object corresponding to the working mode based on the load rate of the point of connection; wherein the working mode comprises a power supply mode and a charging mode; the power supply mode comprises transmitting the electric energy in the electrical device to the energy storage apparatus and/or the grid, and transmitting the electric energy of the energy storage apparatus to the grid and/or the electrical device, and the charging mode comprises transmitting the electric energy of the grid to the energy storage apparatus and/or the electrical device;
a third determination module, configured to determine working parameters corresponding to the working mode of the integrated storage and charging system based on the power consumption object; wherein the power consumption object comprises at least one of the energy storage apparatus, the grid, and the electrical device; and
a control module, configured to control the integrated storage and charging system to work according to the working parameters.

11. An integrated storage and charging system, the integrated storage and charging system comprising a charging apparatus, an energy storage apparatus, and a charge control apparatus; wherein
one end of the energy storage apparatus is connected to a grid via a DC bus; the other end of the energy storage apparatus is connected to the charging apparatus; the energy storage apparatus is configured to charge a battery of an electrical device via the charging apparatus, or to output electric energy in the energy storage apparatus to the DC bus;
one end of the charging apparatus is connected to a charging gun, and the other end of the charging apparatus is connected to the DC bus; the charging apparatus is configured to transmit electric energy in the electrical device to the energy storage apparatus and/or the grid, or to transmit the electric energy of the grid and/or the electric energy of the energy storage apparatus to the electrical device; wherein
the charge control apparatus is configured to determine a load rate of a point of connection where the integrated storage and charging system is connected to the grid; determine a working mode of the integrated storage and charging system and a power consumption object corresponding to the working mode based on the load rate of the point of connection; wherein the working mode comprises a power supply mode and a charging mode; the power supply mode comprises transmitting the electric energy in the electrical device to the energy storage apparatus and/or the grid, and transmitting the electric energy of the energy storage apparatus to the grid and/or the electrical device, and the charging mode comprises transmitting the electric energy of the grid to the energy storage apparatus and/or the electrical device; determine working parameters corresponding to the working mode of the integrated storage and charging system based on the power consumption object; wherein the power consumption object comprises at least one of the energy storage apparatus, the grid and the electrical device; and control the integrated storage and charging system to work according to the working parameters.

12. A computer-readable storage medium storing a computer program thereon, wherein the computer program, when executed by a processor, implements the steps of the method according to any one of claims 1 to 9.

13. A computer program product, comprising computer programs or instructions, wherein the computer programs or instructions, when executed by a processor, implement the steps of the method according to any one of claims 1 to 9.
